(19) Europäisches Patentamt

European Patent Office

Office européen des brevets

(11) **EP 3 473 346 B1**

(12) **EUROPEAN PATENT SPECIFICATION**

(45) Date of publication and mention of the grant of the patent:
**08.01.2020 Bulletin 2020/02**

(51) Int Cl.:
***B21B 1/22*** *(2006.01)*     ***B21B 27/10*** *(2006.01)*
***B21B 45/02*** *(2006.01)*

(21) Application number: **17841289.6**

(86) International application number:
**PCT/JP2017/023155**

(22) Date of filing: **23.06.2017**

(87) International publication number:
**WO 2018/034061 (22.02.2018 Gazette 2018/08)**

(54) **METHOD FOR COLD ROLLING STEEL SHEET, AND METHOD FOR MANUFACTURING STEEL SHEET**

VERFAHREN ZUM KALTWALZEN EINES STAHLBLECHS UND VERFAHREN ZUR HERSTELLUNG EINES STAHLBLECHS

PROCÉDÉ DE LAMINAGE À FROID D'UNE TÔLE D'ACIER, ET PROCÉDÉ DE FABRICATION DE TÔLE D'ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2016 JP 2016160977**

(43) Date of publication of application:
**24.04.2019 Bulletin 2019/17**

(73) Proprietor: **JFE Steel Corporation**
**Tokyo 100-0011 (JP)**

(72) Inventors:
• **MATSUBARA Yukihiro**
**Tokyo 100-0011 (JP)**

• **FUKUSHIMA Tatsuhito**
**Tokyo 100-0011 (JP)**
• **NAGAI Yuu**
**Tokyo 100-0011 (JP)**

(74) Representative: **Haseltine Lake Kempner LLP**
**Bürkleinstrasse 10**
**80538 München (DE)**

(56) References cited:
JP-A- H03 151 106     JP-A- H09 239 430
JP-A- 2002 172 412     JP-A- 2006 255 764
JP-A- 2013 099 757     JP-B2- 3 235 449

**Description**

Technical Field

The present invention relates to methods for cold-rolling steel sheets and methods for manufacturing steel sheets. In particular, the invention relates to a method for cold-rolling a steel sheet and a method for manufacturing a steel sheet that are suitable for efficient manufacture of an electrical steel sheet with superior thickness accuracy. A method according to the preamble of claim 1 is for example known from JP 3235449 B.

Background Art

Electrical steel sheets are used as iron core materials for electrical equipment such as rotating machines. Recently, there has been a need for an electrical steel sheet that exhibits a lower iron loss and a higher magnetic flux density from the viewpoint of energy conservation in electrical equipment, and improvements in the magnetic characteristics of electrical steel sheets have become increasingly important. Electrical steel sheets are also typically punched into a predetermined shape and are then stacked together for use as an iron core. When electrical steel sheets are stacked together for use as an iron core, high thickness accuracy is needed as much as improved magnetic characteristics because large variations in product thickness would degrade the characteristics as an iron core. The thickness accuracy requirements of electrical steel sheets are more stringent than those of, for example, steel sheets for cans and automobiles.

It is conventionally known that reducing the thickness improves the magnetic characteristics of electrical steel sheets, and electrical steel sheets have become even thinner recently. Reducing the thickness by cold rolling correspondingly decreases the production efficiency; therefore, the rolling speed needs be increased in order to maintain the productivity. Reducing the thickness also increases the number of sheets stacked together; therefore, thickness variations will have a greater effect on iron core characteristics. Specifically, thickness variations of more than 3 $\mu$m have been found to degrade the characteristics of iron cores.

As discussed above, to improve the magnetic characteristics of electrical steel sheets, they need to be cold-rolled into thinner sheets than before with superior thickness accuracy. At the same time, rolling needs to be performed at a higher speed from the viewpoint of productivity, and the level of technology required for cold rolling has become even higher.

For high-speed rolling of steel sheets, that is, for efficient cold rolling of steel sheets, it is preferred to perform rolling with a tandem rolling mill composed of a plurality of rolling mill stands. However, it is known that cold tandem rolling tends to cause mill vibrations called chattering when thin, hard materials are rolled at high speed, thus causing a phenomenon in which the thickness varies periodically. It has been reported that chattering often results from poor lubrication. For example, for applications such as steel sheets for cans, Patent Literatures 1 and 2 disclose methods in which the friction coefficient is controlled within an appropriate range so that no chattering phenomenon occurs.

To meet the increasingly stringent product requirements, mill vibration meters for detecting chattering are often installed, for example, on the mill housings of cold tandem rolling mills. The installation of such vibration meters allows the detection of extremely small thickness oscillations, which not only prevents products with low thickness accuracy from flowing out, but also allows the detection of chattering so that a measure such as reducing the rolling speed can be taken before a major problem such as a steel strip fracture occurs, thereby avoiding a fracture.

However, as mentioned above, electrical steel sheets require high thickness accuracy, and even extremely small thickness variations that cannot be detected with instruments such as vibration meters would degrade the characteristics of iron cores. Thus, the methods in which the friction coefficient is detected for chattering control, such as those disclosed in Patent Literature 1 and 2, are difficult to apply to completely prevent the stringent thickness variation requirements of electrical steel sheets.

Patent Literature 3 discloses a method in which a vibration meter is installed on a mill housing and is used to perform frequency analysis of its vibrations for chattering detection. The method disclosed in Patent Literature 3 can be applied to prevent products with low thickness accuracy due to chattering from flowing out to the downstream process; however, this method is difficult to apply to the manufacture of products with superior thickness accuracy.

Citation List

Patent Literature

PTL 1: Japanese Examined Patent Application Publication No. 6-13126

PTL 2: Japanese Patent No. 3368841
PTL 3: Japanese Unexamined Patent Application Publication No. 2015-9261

## Summary of Invention

### Technical Problem

In view of the foregoing, an object of the present invention is to provide efficient methods for cold-rolling and manufacturing steel sheets with superior thickness accuracy.

### Solution to Problem

The inventors have focused on the relationship between thickness variation and work roll roughness during the cold rolling of a steel sheet with a tandem rolling mill. As a result, the inventors have found that the thickness variation can be reduced to 3 $\mu$m or less if the work roll roughness of the last stand and/or the work roll roughness of the stand immediately before the last stand falls within a predetermined roughness range. The inventors have also found that the thickness variation can be reduced by supplying rolling oil at high concentration to the tandem rolling mill. That is, the inventors have found that, when a steel sheet is cold-rolled with a tandem rolling mill, the thickness variation can be reduced by controlling the work roll roughness of the last stand, the work roll roughness of the stand immediately before the last stand, and the rolling oil (introduced oil), thus allowing efficient manufacture of a steel sheet with superior thickness accuracy. The present invention is thus completed.

Based on the foregoing findings, the present invention is characterized as follows.

[1] A method for cold-rolling a steel sheet includes cold-rolling a steel sheet with a tandem rolling mill to which rolling oil is supplied in a recirculating manner. The rolling oil is supplied to the tandem rolling mill such that, when expressed in terms of a thickness h of a film of oil introduced into a roll bite of a last stand as calculated by equation (1) below, a work roll roughness $R_N$ of the last stand, and a work roll roughness $R_{N-1}$ of a stand immediately before the last stand, expression (2) below has a value of 0.5 or more.

$$h = \left[ \{1 + h_1 \cdot B\} - \sqrt{\{1 + h_1 \cdot B\}^2 - 1} \right] \cdot h_1$$

$$h_1 = A \cdot Q / \rho \times 10^{-6}$$

$$B = \frac{\left( e^\delta - e^{(-\alpha \cdot \sigma + \delta)} \right) \cdot Ld}{\alpha \cdot 6\eta \cdot (V_1 + V_2) \cdot R'} \qquad (1)$$

$$\delta = \beta(T - 40)$$

wherein:

    A is a plate-out efficiency (-);
    Q is an amount of rolling oil supplied per unit area (kg/m$^2$);
    $\rho$ is an oil density (kg/m$^3$);
    $\sigma$ is a yield stress of a material (Pa);
    Ld is a contact arc length (mm);
    R' is a flattened roll radius (mm);
    $V_1$ is a roll speed of the last stand (m/sec.);
    $V_2$ is a sheet speed on an exit side of the last stand (m/sec.) ;
    $\eta$ is a viscosity of the rolling oil at 40°C and atmospheric pressure (Pa·s);
    $\alpha$ is a pressure-viscosity coefficient (1/Pa);
    $\beta$ is a temperature-viscosity coefficient (1/°C); and
    T is an oil temperature on an entry side of the roll bite (°C).

$$h / \sqrt{R_N^{\,2} + \left(\frac{R_{N-1}}{2}\right)^2} \qquad (2)$$

wherein:

$R_N$ is the work roll roughness of the last stand ($\mu$m Ra); and
$R_{N-1}$ is the work roll roughness of the stand immediately before the last stand ($\mu$m Ra).

[2] In the method for cold-rolling a steel sheet according to [1] above, the work roll roughness $R_N$ of the last stand is from 0.03 $\mu$m Ra to 0.15 $\mu$m Ra, and/or the work roll roughness $R_{N-1}$ of the stand immediately before the last stand is from 0.03 $\mu$m Ra to 0.25 $\mu$m Ra.

[3] In the method for cold-rolling a steel sheet according to [1] or [2] above, a rolling oil supply system different from a rolling oil recirculation system that supplies the rolling oil in a recirculating manner is installed on the entry side of the last stand of the tandem rolling mill, and the different rolling oil supply system supplies, to the tandem rolling mill, rolling oil at a higher concentration than the rolling oil recirculation system.

[4] A method for manufacturing a steel sheet includes manufacturing a steel sheet using the method for cold-rolling a steel sheet according to any one of [1] to [3] above.

Advantageous Effects of Invention

According to the present invention, a steel sheet with superior thickness accuracy can be efficiently manufactured by cold rolling.

Description of Embodiments

As described above, one of the important requirements of the present invention is to supply rolling oil at high concentration to a tandem rolling mill to reduce thickness variations. For example, rolling oil is supplied at high concentration from a different rolling oil supply system to the tandem rolling mill (last stand) to reduce the rolling load on the last stand and the stand immediately before the last stand, thereby reducing extremely small thickness variations that occur in steel sheets. In addition, the work roll roughness of the last stand and/or the work roll roughness of the stand immediately before the last stand is specified within a predetermined range. This is another important requirement of the present invention.

First, the experimental results that have led to the limitation on the work roll roughness of the last stand and the work roll roughness of the stand immediately before the last stand in the present invention will be described.

Electrical steel sheets with a thickness of 2.0 mm were cold-rolled to a finish thickness of 0.25 mm with a tandem rolling mill composed of five stands at a rolling speed (the sheet speed on the exit side of the last stand) of 700 mpm and were inspected for the occurrence of thickness variations. As the rolling oil, an ester-based rolling oil (20 cSt) was used at a concentration of 3%. In this experiment, the target work roll roughness was set as shown in Table 1. The two levels of 0.10 $\mu$m Ra and 0.20 $\mu$m Ra were combined for #4std. (the fourth stand, i.e., the stand immediately before the last stand), whereas the two levels of 0.05 $\mu$m Ra and 0.10 $\mu$m Ra were combined for #5std. (the fifth stand, i.e., the last stand). Ten to twenty coils were rolled under each condition and were inspected for thickness variations. The thickness variation in the area in the center in the longitudinal direction and in the center across the width of each steel sheet was measured over a length of 500 mm in the longitudinal direction with a dial gauge, and products with thickness variations of 3 $\mu$m or more were determined to be defective. The results thus obtained are shown in Table 1.

As can be seen from Table 1, no thickness variations occurred under the condition where both #4std. and #5std. had small work roll roughnesses. It is believed that a smaller work roll roughness of the last stand results in a decreased rolling load and is thus more effective in reducing thickness variations. It is also believed that the work roll roughness of the stand immediately before the last stand is transferred to the surface of a steel sheet and thus reduces the surface roughness of the steel sheet on the entry side of the last stand, so that thickness variations are reduced by the effect of reducing the rolling load on the last stand.

Next, rolling was similarly performed with the combinations of the work roll roughnesses of #4std. and #5std. shown above that caused thickness variations while rolling oil was supplied (introduced) from a different rolling oil supply system (the second rolling oil system in Table 1) to the work rolls of #5std. at a concentration of 8% (the rolling oil concentration of the rolling oil recirculation system that supplied rolling oil in a recirculating manner was 3%), and the steel sheets were inspected for thickness variations. Here, the thickness of the film of oil introduced into the roll bite was used as a measure of how much rolling oil was supplied for the study of thickness variation. It is believed that, as the thickness of a film of oil introduced into a roll bite becomes larger, the proportion of the boundary lubrication area where the steel sheet comes into direct contact with the work rolls in the roll bite becomes smaller, and the proportion of the fluid lubrication area where the steel sheet comes into contact with the work rolls with the rolling oil therebetween becomes larger, thus contributing to a decreased rolling load and affecting the thickness variation.

The thickness (h) of the film of oil introduced into the roll bite was determined as follows. The thickness (h) of the film of oil introduced into the roll bite was calculated from equation (1) by taking into account the thickness ($h_1$) of the plate-out film on the steel sheet. The thickness ($h_1$) of the plate-out film on the steel sheet is believed to be determined by the amount (Q) of rolling oil supplied and the plate-out efficiency (A). In addition, as indicated by equation (1), the thickness (h) of the film of oil introduced into the roll bite varies with the properties of the rolling oil, such as the viscosity ($\eta$) and the pressure-viscosity coefficient ($\alpha$) of the rolling oil, and the rolling conditions, such as the flattened roll radius (R') and the roll speed ($V_1$) of the last stand. Accordingly, these are organized, and the thickness (h) of the film of oil introduced into the roll bite is determined by equation (1) in the present invention. The plate-out efficiency is measured in advance under each rolling oil supply condition.

$$h = \left[ \{1 + h_1 \cdot B\} - \sqrt{\{1 + h_1 \cdot B\}^2 - 1} \right] \cdot h_1$$

$$h_1 = A \cdot Q / \rho \times 10^{-6}$$

$$B = \frac{\left(e^\delta - e^{(-\alpha \cdot \sigma + \delta)}\right) \cdot Ld}{\alpha \cdot 6\eta \cdot (V_1 + V_2) \cdot R'} \tag{1}$$

$$\delta = \beta(T - 40)$$

wherein:

A is the plate-out efficiency (-);
Q is the amount of rolling oil supplied per unit area ($kg/m^2$) ;
$\rho$ is the oil density ($kg/m^3$);
$\sigma$ is the yield stress of the material (Pa);
Ld is the contact arc length (mm);
R' is the flattened roll radius (mm);
$V_1$ is the roll speed of the last stand (m/sec.);
$V_2$ is the sheet speed on the exit side of the last stand (m/sec.) ;
$\eta$ is the viscosity of the rolling oil at 40°C and atmospheric pressure (Pa·s);
$\alpha$ is the pressure-viscosity coefficient (1/Pa);
$\beta$ is the temperature-viscosity coefficient (1/°C); and
T is the oil temperature on the entry side of the roll bite (°C) .

Table 1 shows the work roll roughness of the last stand, the work roll roughness of the stand immediately before the last stand, and the calculated oil film thickness (the thickness (h) of the film of oil introduced into the roll bite) for each condition.

Investigation of the relationship between thickness variation and the work roll roughness of the last stand, the work roll roughness of the stand immediately before the last stand, and the calculated oil film thickness (the thickness (h) of the film of oil introduced into the roll bite) showed that they can be organized into expression (2). Table 1 also shows the value of expression (2) and the results of the number of products with thickness variations. A larger value of expression (2) means a larger thickness (h) of the film of oil introduced into the roll bite, i.e., a thicker oil film, relative to the work roll roughness of the last stand and the work roll roughness of the stand immediately before the last stand. The results of the investigation showed that the occurrence of thickness variations can be reduced when the value of expression (2) is 0.5 or more.

$$h / \sqrt{R_N{}^2 + \left(\frac{R_{N-1}}{2}\right)^2} \qquad (2)$$

wherein:

$R_N$ is the work roll roughness of the last stand ($\mu$m Ra); and
$R_{N-1}$ is the work roll roughness of the stand immediately before the last stand ($\mu$m Ra).

The above experimental results showed that thickness variations can be reduced if the ratio of the thickness of the film of oil introduced into the roll bite to the work roll roughness (the work roll roughness of the last stand and the work roll roughness of the stand immediately before the last stand) as defined by expression (2) is 0.5 or more. The results also showed that thickness variations can be further reduced if the work roll roughness of the last stand is from 0.03 $\mu$m Ra to 0.15 $\mu$m Ra and/or the work roll roughness of the stand immediately before the last stand is from 0.03 $\mu$m Ra to 0.25 $\mu$m Ra. It is not necessary to set a lower limit to the work roll roughness; however, it is undesirable that the work roll roughness of the last stand be less than 0.03 $\mu$m Ra or the work roll roughness of the stand immediately before the last stand be less than 0.03 $\mu$m Ra because the polishing load on the work rolls would increase. Preferably, the work roll roughness of the last stand is from 0.03 $\mu$m Ra to 0.07 $\mu$m Ra, and the work roll roughness of the stand immediately before the last stand is from 0.03 $\mu$m Ra to 0.16 $\mu$m Ra.

[Table 1]

| #1std. | #2std. | #3std. | #4std. | #5std. | Second rolling oil system | Calculated oil film thickness | Expression (2) | Thickness variation |
|---|---|---|---|---|---|---|---|---|
| 0.50 $\mu$m Ra | 0.35 $\mu$m Ra | 0.35 $\mu$m Ra | 0.20 $\mu$m Ra | 0.10 $\mu$m Ra | None | 0.054 $\mu$m | 0.38 | 4/16 coils |
|  |  |  | 0.20 $\mu$m Ra | 0.05 $\mu$m Ra | None | 0.054 $\mu$m | 0.48 | 3/14 coils |
|  |  |  | 0.10 $\mu$m Ra | 0.10 $\mu$m Ra | None | 0.054 $\mu$m | 0.48 | 2/14 coils |
|  |  |  | 0.10 $\mu$m Ra | 0.05 $\mu$m Ra | None | 0.054 $\mu$m | 0.76 | 0/13 coils |
| 0.50 $\mu$m Ra | 0.35 $\mu$m Ra | 0.35 $\mu$m Ra | 0.20 $\mu$m Ra | 0.10 $\mu$m Ra | Used | 0.062 $\mu$m | 0.44 | 3/14 coils |
|  |  |  | 0.20 $\mu$m Ra | 0.05 $\mu$m Ra | Used | 0.062 $\mu$m | 0.55 | 1/14 coils |
|  |  |  | 0.10 $\mu$m Ra | 0.10 $\mu$m Ra | Used | 0.062 $\mu$m | 0.55 | 1/15 coils |

As described above, the use of the method for cold-rolling a steel sheet according to the present invention allows efficient manufacture of a steel sheet with superior thickness accuracy.

EXAMPLE 1

The present invention will now be specifically described with reference to the following examples.
Electrical steel sheets were cold-rolled with a tandem rolling mill including five four-high rolling mill stands and were assessed for the percentage of occurrence of defective products with thickness variations. One hundred coils of electrical steel sheets with a Si content of from 3.1% by mass to 3.7% by mass and a thickness of 1.8 mm were provided and finished to a thickness of 0.25 mm at a rolling speed (the sheet speed on the exit side of the last stand) of 700 mpm under each condition.
Table 2 shows the conditions. The work rolls were replaced every 20 to 30 coils for each condition, and the roll roughness was measured before and after the replacement of the work rolls. Table 2 lists the maximum and minimum roughnesses (Ra). For the inventive examples, depending on the roughness of the work rolls, a second rolling oil system (a rolling oil supply system different from the rolling oil recirculation system that supplied rolling oil in a recirculating manner) was used to control and set the calculated oil film (the thickness (h) of the film of oil introduced into the roll bite) so that the ratio of the thickness (h) of the film of oil introduced into the roll bite to the work roll roughness as defined by expression (2) was 0.5 or more. The thickness variation was measured by the same procedure as described above. Products with thickness variations of 3 $\mu$m or more were determined to be defective, and the percentage of defective products relative to the total (100 coils) was calculated.

The results thus obtained are shown together with the conditions in Table 2.

[Table 2]

| No. | | #4std. | #5std. | Second rolling oil system | Calculated oil film thickness | Expression (2) | Percentage of defective products |
|---|---|---|---|---|---|---|---|
| 1 | Comparative example | 0.08 to 0.11 $\mu$m Ra | 0.08 to 0.11 $\mu$m Ra | None | 0.056 $\mu$m | 0.46 to 0.63 | 5.20% |
| 2 | Inventive example | | 0.04 to 0.06 $\mu$m Ra | None | 0.056 $\mu$m | 0.69 to 0.99 | 0.60% |
| 3 | Inventive example | | 0.08 to 0.11 $\mu$m Ra | 10% | 0.065 $\mu$m | 0.53 to 0.73 | 0.70% |
| 4 | Comparative example | 0.17 to 0.23 $\mu$m Ra | 0.08 to 0.11 $\mu$m Ra | None | 0.056 $\mu$m | 0.35 to 0.48 | 9.40% |
| 5 | Comparative example | | 0.04 to 0.06 $\mu$m Ra | None | 0.056 $\mu$m | 0.43 to 0.60 | 5.10% |
| 6 | Comparative example | | 0.08 to 0.11 $\mu$m Ra | 10% | 0.065 $\mu$m | 0.41 to 0.56 | 4.30% |
| 7 | Inventive example | | 0.04 to 0.06 $\mu$m Ra | 10% | 0.065 $\mu$m | 0.50 to 0.69 | 0.90% |
| 8 | Inventive example | 0.26 to 0.28 $\mu$m Ra | 0.04 to 0.06 $\mu$m Ra | 25% | 0.076 $\mu$m | 0.50 to 0.56 | 1.40% |
| 9 | Inventive example | 0.08 to 0.09 $\mu$m Ra | 0.16 to 0.17 $\mu$m Ra | 45% | 0.088 $\mu$m | 0.50 to 0.53 | 2.10% |

As can be seen, the percentages of defective products with thickness variations for the comparative examples were 4.30% to 9.40%, whereas the percentages of defective products for the inventive examples were reduced to 2.10% or less.

As described above, the cold rolling method according to the present invention can be applied to efficiently manufacture a steel sheet with particularly superior thickness accuracy by not only appropriately setting the work roll roughness of the last stand and/or the work roll roughness of the stand immediately before the last stand, but also appropriately controlling the oil film thickness (the thickness of the film of oil introduced into the roll bite of the last stand) with the second rolling oil system.

Industrial Applicability

The cold rolling method according to the present invention is suitable for electrical steel sheets, whose thickness accuracy requirements are stringent.

**Claims**

1.    A method for cold-rolling a steel sheet, comprising cold-rolling a steel sheet with a tandem rolling mill to which rolling oil is supplied in a recirculating manner, the method **characterised in that**: the rolling oil is supplied to the tandem rolling mill such that, when expressed in terms of a thickness h of a film of oil introduced into a roll bite of a last stand as calculated by equation (1) below, a work roll roughness $R_N$ of the last stand, and a work roll roughness $R_{N-1}$ of a stand immediately before the last stand, expression (2) below has a value of 0.5 or more:

$$h = \left[ \{1 + h_1 \cdot B\} - \sqrt{\{1 + h_1 \cdot B\}^2 - 1} \right] \cdot h_1$$

$$h_1 = A \cdot Q / \rho \times 10^{-6}$$

$$B = \frac{\left(e^{\delta} - e^{(-\alpha \cdot \sigma + \delta)}\right) \cdot Ld}{\alpha \cdot 6\eta \cdot (V_1 + V_2) \cdot R'} \qquad (1)$$

$$\delta = \beta(T - 40)$$

wherein:

A is a plate-out efficiency (-);
Q is an amount of rolling oil supplied per unit area (kg/m$^2$) ;
$\rho$ is an oil density (kg/m$^3$);
$\sigma$ is a yield stress of a material (Pa);
Ld is a contact arc length (mm);
R' is a flattened roll radius (mm);
$V_1$ is a roll speed of the last stand (m/sec.);
$V_2$ is a sheet speed on an exit side of the last stand (m/sec.) ;
$\eta$ is a viscosity of the rolling oil at 40°C and atmospheric pressure (Pa·s);
$\alpha$ is a pressure-viscosity coefficient (1/Pa);
$\beta$ is a temperature-viscosity coefficient (1/°C); and
T is an oil temperature on an entry side of the roll bite (°C), and

$$h / \sqrt{R_N^2 + \left(\frac{R_{N-1}}{2}\right)^2} \qquad (2)$$

wherein:

$R_N$ is the work roll roughness of the last stand ($\mu$m Ra); and
$R_{N-1}$ is the work roll roughness of the stand immediately before the last stand ($\mu$m Ra).

2.    The method for cold-rolling a steel sheet according to Claim 1, wherein the work roll roughness $R_N$ of the last stand is from 0.03 $\mu$m Ra to 0.15 $\mu$m Ra, and/or the work roll roughness $R_{N-1}$ of the stand immediately before the last stand is from 0.03 $\mu$m Ra to 0.25 $\mu$m Ra.

3.    The method for cold-rolling a steel sheet according to Claim 1 or 2, wherein a rolling oil supply system different from a rolling oil recirculation system that supplies the rolling oil in a recirculating manner is installed on the entry side of the last stand of the tandem rolling mill, and the different rolling oil supply system supplies, to the tandem rolling mill, rolling oil at a higher concentration than the rolling oil recirculation system.

4. A method for manufacturing a steel sheet, comprising manufacturing a steel sheet using the method for cold-rolling a steel sheet according to any one of Claims 1 to 3.

**Patentansprüche**

1. Verfahren zum Kaltwalzen eines Stahlblechs, umfassend das Kaltwalzen eines Stahlblechs mit einem Tandemwalzwerk, dem Walzöl in einer umlaufenden Weise zugeführt wird, wobei das Verfahren **dadurch gekennzeichnet ist, dass**:
das Walzöl dem Tandemwalzwerk derart zugeführt wird, dass, wenn es in Bezug auf eine Dicke h eines Filmes von Öl, das in einen Walzenangriff eines letzten Gerüstes eingebracht wird, wie durch Gleichung (1) unten berechnet, eine Arbeitswalzenrauigkeit $R_N$ des letzten Gerüstes und eine Arbeitswalzenrauigkeit $R_{N-1}$ eines Gerüstes unmittelbar vor dem letzten Gerüst ausgedrückt wird, Ausdruck (2) unten einen Wert von 0,5 oder mehr aufweist:

$$h = \left[ \{1 + h_1 \cdot B\} - \sqrt{\{1 + h_1 \cdot B\}^2 - 1} \right] \cdot h_1$$

$$h_1 = A \cdot Q / \rho \times 10^{-6}$$

$$B = \frac{\left(e^{\delta} - e^{(-\alpha \cdot \sigma + \delta)}\right) \cdot Ld}{\alpha \cdot 6\eta \cdot (V_1 + V_2) \cdot R'} \qquad (1)$$

$$\delta = \beta(T - 40)$$

wobei:

A eine Belagbildungseffizienz ist (-);
Q eine Menge von Walzöl ist, die je Flächeneinheit zugeführt wird ($kg/m^2$);
$\rho$ eine Öldichte ist ($kg/m^3$);
$\sigma$ eine Streckgrenze eines Materials ist (Pa);
Ld eine Kontaktbogenlänge ist (mm);
R' ein abgeflachter Walzenradius ist (mm);
$V_1$ eine Walzengeschwindigkeit des letzten Gerüstes ist (m/s) ;
$V_2$ eine Blechgeschwindigkeit auf einer Austrittsseite des letzten Gerüstes ist (m/s);
$\eta$ eine Viskosität des Walzöles bei 40 °C und Atmosphärendruck (Pa·s) ist;
$\alpha$ ein Druck-Viskositäts-Beiwert ist (1/Pa);
$\beta$ ein Temperatur-Viskositäts-Beiwert ist (1/°C); und
T eine Öltemperatur auf einer Eintrittsseite des Walzenangriffes ist (°C) und

$$h / \sqrt{R_N{}^2 + \left(\frac{R_{N-1}}{2}\right)^2} \qquad (2)$$

wobei:

$R_N$ die Arbeitswalzenrauigkeit des letzten Gerüstes ist ($\mu$m Ra); und
$R_{N-1}$ die Arbeitswalzenrauigkeit des Gerüstes unmittelbar vor dem letzten Gerüst ist ($\mu$m Ra).

2. Verfahren zum Kaltwalzen eines Stahlblechs nach Anspruch 1, wobei die Arbeitswalzenrauigkeit $R_N$ des letzten Gerüstes 0,03 $\mu$m Ra bis 0,15 $\mu$m Ra beträgt und/oder die Arbeitswalzenrauigkeit $R_{N-1}$ des Gerüstes unmittelbar vor dem letzten Gerüst 0,03 $\mu$m Ra bis 0,25 $\mu$m Ra beträgt.

**3.** Verfahren zum Kaltwalzen eines Stahlblechs nach Anspruch 1 oder 2, wobei ein Walzöl-Zufuhrsystem, das ein anderes als ein Walzöl-Umlaufsystem ist, welches das Walzöl in einer umlaufenden Weise zuführt, auf der Eintrittsseite des letzten Gerüstes des Tandemwalzwerkes installiert ist und das andere Walzöl-Zufuhrsystem dem Tandemwalzwerk Walzöl in einer höheren Konzentration als das Walzöl-Umlaufsystem zuführt.

**4.** Verfahren zum Herstellen eines Stahlblechs, umfassend das Herstellen eines Stahlblechs unter Benutzen des Verfahrens zum Kaltwalzen eines Stahlblechs nach einem von Anspruch 1 bis 3.

**Revendications**

**1.** Procédé de laminage à froid d'une tôle d'acier, comprenant le laminage à froid d'une tôle d'acier avec un laminoir tandem auquel de l'huile de laminage est fournie en recirculation, le procédé étant **caractérisé en ce que** :
l'huile de laminage est fournie au laminoir tandem de telle sorte que, lorsqu'elle est exprimée en termes d'épaisseur $h$ d'un film d'huile introduit dans un intervalle de cylindres d'une dernière cage telle que calculée par l'équation (1) ci-dessous, de rugosité de cylindre de travail $R_N$ de la dernière cage et de rugosité de cylindre de travail $R_{N-1}$ d'une cage immédiatement avant la dernière cage, l'expression (2) ci-dessous a une valeur de 0,5 ou plus :

$$h = \left[ \{1 + h_1 \cdot B\} - \sqrt{\{1 + h_1 \cdot B\}^2 - 1} \right] \cdot h_1$$
$$h_1 = A \cdot Q / \rho \times 10^{-6}$$
$$B = \frac{\left(e^{\delta} - e^{(-\alpha \cdot \sigma + \delta)}\right) \cdot Ld}{\alpha \cdot 6\eta \cdot (V_1 + V_2) \cdot R'} \qquad (1)$$
$$\delta = \beta(T - 40)$$

dans lequel :

A est une efficacité de sortie de plaque (-) ;
Q est une quantité d'huile de laminage fournie par unité de surface (kg/m$^2$) ;
$\rho$ est une densité d'huile (kg/m$^3$) ;
$\sigma$ est une limite d'élasticité d'un matériau (Pa) ;
Ld est une longueur d'arc de contact (mm) ;
R' est un rayon de cylindre aplati (mm) ;
$V_1$ est une vitesse de laminage de la dernière cage (m/sec.) ;
$V_2$ est une vitesse de feuille sur un côté de sortie de la dernière cage (m/sec.) ;
$\eta$ est une viscosité de l'huile de laminage à 40°C et à la pression atmosphérique (Pa•s) ;
$\alpha$ est un coefficient pression-viscosité (1/Pa) ;
$\beta$ est un coefficient température-viscosité (1/°C) ; et
T est la température de l'huile sur un côté d'entrée de l'intervalle de cylindres (°C), et

$$h / \sqrt{R_N{}^2 + \left(\frac{R_{N-1}}{2}\right)^2} \qquad (2)$$

dans lequel :

$R_N$ est la rugosité de cylindre de travail de la dernière cage ($\mu$m Ra) ; et
$R_{N-1}$ est la rugosité de cylindre de travail de la cage immédiatement avant la dernière cage ($\mu$m Ra).

**2.** Procédé de laminage à froid d'une tôle d'acier selon la revendication 1, dans lequel la rugosité de cylindre de travail $R_N$ de la dernière cage est comprise entre 0,03 $\mu$m Ra et 0,15 $\mu$m Ra, et/ou la rugosité de cylindre de travail $R_{N-1}$

de la cage immédiatement avant la dernière cage est comprise entre 0,03 $\mu$m Ra et 0,25 $\mu$m Ra.

3.  Procédé de laminage à froid d'une tôle d'acier selon la revendication 1 ou 2, dans lequel un système d'alimentation en huile de laminage différent du système de recirculation d'huile de laminage qui alimente l'huile de laminage en recirculation est installé sur le côté d'entrée de la dernière cage du laminoir tandem, et le système d'alimentation en huile de laminage différent fournit, au laminoir tandem, de l'huile de laminage à une concentration supérieure à celle du système de recirculation d'huile de laminage.

4.  Procédé de fabrication d'une tôle d'acier, comprenant la fabrication d'une tôle d'acier en utilisant le procédé de laminage à froid d'une tôle d'acier selon l'une quelconque des revendications 1 à 3.

**EP 3 473 346 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3235449 B
- JP 6013126 A
- JP 3368841 B
- JP 2015009261 A